# EUROPÄISCHE PATENTANMELDUNG

(11) **EP 3 395 562 A1**
(43) Veröffentlichungstag der Anmeldung: **31.10.2018**
(21) Anmeldenummer: 17168286.7
(22) Anmeldetag: 26.04.2017
(51) Int. Cl.: B32B 5/32, B32B 37/04, B32B 37/18, B29C 65/14, B29K 101/12, B29K 105/04, B29L 9/00, B32B 27/06, B32B 27/08

(54) **VERFAHREN ZUR HERSTELLUNG VON ZUMINDEST ZWEILAGIGEN PLATTEN AUS MINDESTENS EINER OFFENZELLIGEN AUSGANGSPLATTE**

(71) Anmelder: BASF SE, 67056 Ludwigshafen am Rhein (DE)
(72) Erfinder: KICIAK, Thomas, 67056 Ludwigshafen am Rhein (DE); DIETZEN, Franz-Josef, 67056 Ludwigshafen am Rhein (DE); SCHERZER, Dietrich, 67056 Ludwigshafen am Rhein (DE)
(74) Vertreter: Ellwanger, Arndt

(57) **Zusammenfassung**

Die vorliegende Erfindung betrifft ein Verfahren zur Herstellung einer zumindest zweilagigen Platte durch Verbinden von mindestens einer dünneren thermoplastischen Schaumstoffplatte (TS) und mindestens einer dünneren Platte (OZ) als Ausgangsplatten. Die mindestens eine dünnere Platte (OZ) ist aus einem offenzelligen Material hergestellt. Weiterhin betrifft die vorliegende Erfindung die zumindest zweilagige Platte als solche sowie deren Verwendung als Dämmmaterial für die Außenwand eines Bauwerks. Darüber hinaus betrifft sie auch die Außenwand, auf die die zumindest zweilagige Platte aufgebracht ist.

## Beschreibung

Die vorliegende Erfindung betrifft ein Verfahren zur Herstellung einer zumindest zweilagigen Platte durch Verbinden von mindestens einer dünneren thermoplastischen Schaumstoffplatte (TS) und mindestens einer dünneren Platte (OZ) als Ausgangsplatten. Die mindestens eine dünnere Platte (OZ) ist aus einem offenzelligen Material hergestellt. Weiterhin betrifft die vorliegende Erfindung die zumindest zweilagige Platte als solche sowie deren Verwendung als Dämmmaterial für die Außenwand eines Bauwerks. Darüber hinaus betrifft sie auch die Außenwand, auf die die zumindest zweilagige Platte aufgebracht ist.

Die Anzahl der Lagen der zumindest zweilagigen Platte als solche ergibt sich aus der Anzahl der dünneren Platten (OZ) und (TS), die miteinander verbunden, vorzugsweise thermisch miteinander verschweißt, werden. Wenn beispielsweise drei dünnere Ausgangsplatten (OZ) und (TS) miteinander verbunden werden, wird eine dreilagige Platte als solche erhalten, im Fall von vier dünneren Ausgangsplatten (OZ) und (TS) ergibt sich demzufolge eine vierlagige Platte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

Extrudierte Kunststoffschaumplatten von großer Dicke werden in DE-A 101 063 41 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 41 sind jedoch keine Angaben enthalten, wie anstelle einer Verklebung die Verschweißung der Ausgangsplatten konkret durchgeführt werden kann.

DE-A 44 21 016 offenbart ein Verfahren zur Herstellung von CO₂-geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden.

WO 2015/011016 betrifft ein Verfahren zur Herstellung von zumindest zweilagigen thermoplastischen Schaumstoffplatten durch thermisches Verschweißen von mindestens zwei dünneren thermoplastischen Schaumstoffplatten. Bei diesem Verfahren werden mindestens zwei Heizelemente auf zueinander versetzten Ebenen zwischen die zu verschweißenden Oberflächen der dünneren thermoplastischen Schaumstoffplatten geführt, wobei sich die Schaumstoffplatten und die Heizelemente nicht gegenseitig berühren. Dabei werden entweder zwei Heizelemente aus jeweils zueinander entgegengesetzten Richtungen in den Zwischenraum zwischen die beiden Ausgangsplatten eingeführt und/oder die zwei Heizelemente werden in jeweils zueinander entgegengesetzten Richtungen aus diesem Zwischenraum wieder entfernt.

Die internationale Anmeldung PCT/EP2015/080180 betrifft ein Verfahren zur Herstellung von zumindest zweilagigen thermoplastischen Platten durch thermisches Verschweißen von zumindest einer ersten dünneren thermoplastischen Platte mit einer Dichte (D1) und zumindest einer zweiten dünneren thermoplastischen Platte mit einer Dichte (D2), wobei die Dichte (D1) der ersten dünneren thermoplastischen Platte kleiner ist als die Dichte (D2) der zweiten dünneren thermoplastischen Platte. Bei dem Verfahren werden zumindest ein erstes Heizelement und zumindest ein zweites Heizelement auf zueinander versetzten Ebenen zwischen die beiden dünneren thermoplastischen Platten eingeführt, wobei sich die Oberflächen der dünneren thermoplastischen Platten die Oberflächen der Heizelemente nicht berühren. Das erste Heizelement überträgt eine Energiemenge (E1) auf die Oberfläche der ersten dünneren thermoplastischen Platte und das zweite Heizelement eine Energiemenge (E2) auf die Oberfläche der zweiten dünneren thermoplastischen Platte, wobei die Energiemenge (E1) kleiner ist als die Energiemenge (E2).

EP-A 1 201 838 betrifft eine Dämmplatte für die Wärmeisolierung von Gebäudefassaden. Die zumindest zweischichtige Dämmplatte weist eine erste relativ dünne Materialschicht aus expandiertem Polystyrol auf, wobei im Fall einer dreischichtigen Dämmplatte auch die dritte Schicht der ersten Schicht entspricht, die folglich als Außenflächen der Dämmplatte verwendet werden. Die zweite Schicht der Dämmplatte hat hingegen eine Dicke, die einem Vielfachen der Dicke der ersten und gegebenenfalls der dritten Schicht entspricht, wobei die zweite Schicht aus einem Polyurethanschaum besteht. Die jeweiligen Dämmplatten werden aus den entsprechenden Ausgangsplatten beim Herstellungsprozess in situ miteinander verbunden, wobei die auf das Polyurethan basierende Schicht gleichzeitig als Klebeschicht fungiert. Ein Verkleben oder insbesondere Verschweißen von bereits fertigen Ausgangsplatten ist in EP-A 1 201 838 ebenfalls nicht beschrieben.

EP 16 182 632.6 betrifft ein Verfahren zur Herstellung von zumindest zweilagigen Platten durch Verbinden von mindestens einer dünneren thermoplastischen Schaumstoffplatte und mindestens einer dünneren Platte als Ausgangsplatten. Die dünnere Platte ist dabei aus einem Material hergestellt, das einen mittleren Zelldurchmesser ≤ 1000 nm aufweist, vorzugsweise aus mindestens einem Aerogel und/oder Xerogel. Die zumindest zweilagigen Platten eignen sich zur Verwendung als Wärmedämmstoff.

EP 16 182 620.1 betrifft ein Verfahren zur Herstellung von zumindest zweilagigen Schaumstoffplatten durch Verbinden von mindestens einer dünneren thermoplastischen Schaumstoffplatte (TS) und mindestens einer dünneren Schaumstoffplatte (NS) als Ausgangsplatten. Die dünnere Schaumstoffplatte (NS) weist an zwei sich gegenüberliegenden Seiten jeweils eine Metalldeckschicht auf, wobei eine Metalldeckschicht in der durch das erfindungsgemäße Verfahren erhaltenen zumindest zweilagigen Schaumstoffplatte nach dem Verbinden sich zwischen jeweils einer der beiden vorgenannten dünneren Ausgangsplatten (TS) und (NS) befindet. Die dünnere Schaumstoffplatte (NS) kann eine thermoplastische oder eine nichtthermoplastische Schaumstoffplatte, beispielsweise eine duroplastische Schaumstoffplatte, sein. Die zumindest zweilagigen Platten eignen sich zur Verwendung als Wärmedämmstoff.

Im Stand der Technik ist somit nirgendwo offenbart, dass auch zumindest zweilagige Platten hergestellt werden können, die einerseits auf mindestens einer dünneren thermoplastischen Schaumstoffplatte und andererseits auf mindestens einer dünneren Platte basieren, die aus einem offenzelligen Material hergestellt ist.

Die der vorliegenden Erfindung zugrunde liegende Aufgabe besteht in der Bereitstellung eines neuen Verfahrens zur Herstellung von zumindest zweilagigen Platten bzw. in den zumindest zweilagigen Platten als solchen.

Gelöst wird die Aufgabe durch ein Verfahren zur Herstellung einer zumindest zweilagigen Platte durch Verbinden von mindestens einer dünneren thermoplastischen Schaumstoffplatte (TS) und mindestens einer dünneren Platte (OZ), wobei die mindestens eine dünnere Platte (OZ) aus einem offenzelligen Material hergestellt ist.

Die mit dem erfindungsgemäßen Verfahren hergestellten zumindest zweilagigen Platten zeichnen sich dadurch aus, dass die vorteilhaften Eigenschaften der einzelnen Ausgangsplatten miteinander kombiniert werden können, sodass zwei- oder mehrlagige Platten mit auf das jeweilige Anforderungsprofil maßgeschneiderten Materialeigenschaften bereitgestellt werden können.

Diese zwei- oder mehrlagigen Platten zeichnen sich insbesondere durch gute Dämmeigenschaften und/oder eine gute Verarbeitbarkeit aus.

So sind beispielsweise thermoplastische Schaumstoffplatten, die in der Regel vollständig oder überwiegend geschlossenzellig sind, aufgrund ihrer geschlossenen Zellen in der Regel weniger gut zur Schallabsorption/Lärmdämmung geeignet als beispielsweise offenzellige Materialien, die eine deutlich höhere Schallabsorption aufweisen.

Im Gegensatz dazu können thermoplastische Schaumstoffplatten, wie Polystyrolschaumstoffe, gut verarbeitet werden, wodurch deren Anwendung beispielsweise im Bauwesen sehr vorteilhaft ist, weil diese Platten über eine gute Anhaftung an Putz oder sonstigen Beschichtungen verfügen. Solche thermoplastischen Schaumstoffplatten sind auch besonders unempfindlich gegenüber Beschädigungen, wodurch auch eine Stabilisierung der zumindest zweilagigen Platte erzielt wird. Weiterhin verfügen thermoplastische Schaumstoffplatten über einen niedrigen Wärmeleitfähigkeitswert A, so dass sie als Wärmedämmmaterialien eingesetzt werden können.

Im Gegensatz dazu ist die Anhaftung von Platten basierend auf einem Material mit offenen Zellen an Putz oder sonstigen Beschichtungen relativ schlecht. Weiterhin weisen diese Platten oft eine hohe Hydrophilie auf, das heißt sie nehmen Wasser auf, weshalb sie für Anwendungen im Außenbereich bisher ungeeignet waren. Die Schallabsorptionseigenschaften solcher offenzelliger Materialien sind hingegen deutlich besser als diejenigen der thermoplastischen Schaumstoffplatten.

Demzufolge können durch die vorliegende Erfindung auf einfache Weise zumindest zweilagige Platten bereitgestellt werden, die zur Schallabsorption/Lärmdämmung sowie zur Wärmedämmung im Außenbereich eingesetzt werden können und die zudem über die von Standard- (thermoplastischen) Schaumstoffen bekannten Eigenschaften, wie gute Putzhaftung, mechanische Unempfindlichkeit, leichte Verarbeitbarkeit und/oder Verfügbarkeit in beliebigen Dicken verfügen.

Sofern die erfindungsgemäßen zumindest zweilagigen Platten durch thermisches Verschweißen hergestellt werden, ergeben sich darüber hinaus vorteilhafte Eigenschaften im Zusammenhang mit einer (verringerten) Brennbarkeit sowie dem Erfüllen von Brandtests.

Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größerer Dicke. Dieses unterschiedliche Brandverhalten ist in der Ausbildung der sogenannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102-1: 1998-05) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, sodass das entsprechende Produkt nicht stabil ist.

Die in einer bevorzugten Ausführungsform mit dem erfindungsgemäßen Verfahren durch thermisches Verschweißen hergestellten zumindest zweilagigen Platten zeichnen sich folglich dadurch aus, dass die entsprechende Anzahl an dünneren Ausgangsplatten (TS) und (OZ) auf sehr stabile Weise zu den zumindest zweilagigen Platten (Produkt) zusammengefügt werden kann, sofern dieses Zusammenfügen durch thermisches Verschweißen erfolgt. Die im erfindungsgemäßen Verfahren gebildeten Schweißnähte, die aufgrund des thermischen Verschweißens die einzelnen dünneren Ausgangsplatten zu der zumindest zweilagigen Platte miteinander verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Das erfindungsgemäße Verfahren ist in dieser Ausführungsform von seinem Prinzip her ein sogenanntes "kontaktloses Verschweißen" (oder "berührungsloses Erhitzen"), da die Wärmeübertragung von den Heizelementen auf die zu verschweißenden Oberflächen der dünneren thermoplastischen bzw. der dünneren Platten aus einem offenzelligen Material (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden. Diese Einfallstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallstellen führen zu verstärkten Inhomogenitäten in der Schweißnaht, was sich wiederum (wie nachfolgend aufgeführt) negativ auf das Brandverhalten, aber auch die Stabilität der zumindest zweilagigen thermoplastischen Schaumstoffplatten auswirken kann.

Aufgrund der Verwendung von mindestens zwei Heizelementen, die auf parallel zueinander versetzten Ebenen und ohne direkten Kontakt mit den zu verschweißenden Ausgangsplatten im Rahmen dieser Ausführungsform des erfindungsgemäßen Verfahrens eingesetzt werden, ist als weiterer Vorteil festzuhalten, dass die zu verschweißenden Oberflächen der Ausgangsplatten in einem weit geringerem Maße einer unterschiedlichen Wärmebelastung ausgesetzt sind im Vergleich zu Verfahren gemäß dem Stand der Technik. Bei der Verwendung von nur einem Heizelement, das gegebenenfalls auch zweigeteilt sein kann, aber wo die einzelnen Teile auf einer Ebene geführt werden, sind im Gegensatz zum erfindungsgemäßen Verfahren die einzelnen Bereiche der jeweiligen Plattenoberfläche der zu verschweißenden Ausgangsplatten einer unterschiedlichen Wärmebelastung ausgesetzt, weil insbesondere die Randbereiche der Ausgangsplatten im Durchschnitt über eine deutlich längere Zeitspanne der entsprechenden Wärmequelle direkt oder indirekt ausgesetzt sind. Dies hat wiederum Auswirkungen auf die Homogenität der Schweißnaht.

In diesem Zusammenhang ist auch zu berücksichtigen, dass bei beweglichen Heizelementen durch die Dynamik des Ein- und Ausfahrens der Heizelemente zwischen die zu verschweißenden Ausgangsplatten kalte Luft hinter dem Heizelement hergezogen wird, während hingegen warme Luft vor dem Heizelement "aus dem Zwischenraum hinausgeschoben wird". Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Aufgrund der erfindungsgemäßen Verwendung von zwei beweglichen Heizelementen auf zueinander parallelen Ebenen wird hingegen Luft nur in einem deutlich geringerem Maße verdrängt und führt daher nicht zu einem unkontrollierten Ein- und Ausströmen von zu kalter oder heißer Luft. Insbesondere wenn im erfindungsgemäßen Verfahren zwei Heizelemente verwendet werden, die auf parallelen Ebenen aus zueinander entgegengesetzten Richtungen in den Zwischenraum zwischen den Ausgangplatten eingeführt werden, kann das Problem der Pfropfenströmung bzw. turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzte Richtungen erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahrschritt im Vergleich zum Einfahrschritt.

Ein weiterer Vorteil ist im erfindungsgemäßen Verfahren darin zu sehen, dass hinsichtlich der Plattendicke der Ausgangsplatten keine Begrenzungen erforderlich sind. Im Gegensatz dazu können in Verfahren gemäß dem Stand der Technik, beispielsweise wie sie in DE-A 10 2012 204 822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den - in diesem Verfahrensstadium - prinzipiell starren Ausgangsplatten bewegt. Ein Bewegen der Ausgangsplatten findet im erfindungsgemäßen Verfahren prinzipiell erst nach Entfernung der Heizelemente aus dem Plattenzwischenraum statt, wobei die zu verschweißenden Ausgangsplatten durch Bewegung von mindestens einer der Ausgangsplatten miteinander verbunden werden. Mit dem erfindungsgemäßen Verfahren lassen sich so problemlos drei- oder höherlagige Platten von beliebiger Dicke herstellen.

Ein weiterer Vorteil in einer Ausführungsform des erfindungsgemäßen Verfahrens ist darin zu sehen, dass prinzipiell sehr kurze Umstellzeiten durchgeführt werden können. Unter "Umstellzeiten" wird erfindungsgemäß die Zeit verstanden, die zwischen Erhitzen bzw. Aufschmelzen der Oberfläche der Ausgangsplatte und dem Zusammenfügen der erhitzten bzw. aufgeschmolzenen Ausgangsplatten verstreicht. Im erfindungsgemäßen Verfahren ist dies somit die Zeitspanne, die mit dem Einführen von wenigstens zwei Heizelementen gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden.

Im Rahmen der vorliegenden Erfindung wird unter den Begriffen "Thermoplast" oder "thermoplastische Schaumstoffplatte" Folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden. Thermoplastische Schaumstoffplatten sind folglich Schaumstoffe in Plattenform, die über die vorgenannten Polymereigenschaften eines Thermoplastes verfügen. Eine thermoplastische Schaumstoffplatte ist überwiegend, also zu mindestens 50 Gew.-%, aus mindestens einem Thermoplast hergestellt (bezogen auf das Gesamtgewicht der jeweiligen Platten). Gegebenenfalls können noch weitere Materialien/Komponenten in der thermoplastischen Schaumstoffplatte enthalten sein, die selbst keine Thermoplasten sind. Vorzugsweise ist die thermoplastische Schaumstoffplatte vollständig oder nahezu vollständig (mindestens 95 Gew.-%) aus mindestens einem Thermoplast hergestellt.

Im Rahmen der vorliegenden Erfindung wird unter dem Begriff "offenzelliges Material" ein Material verstanden, das eine Vielzahl von eng aneinander liegenden Zellen mit Hohlräumen, die beispielsweise mit Luft und/oder einem anderen Gas gefüllt sind, enthält, wobei die Hohlräume durch Öffnungen in den Wänden der jeweiligen Zellen miteinander verbunden sind.

Die Zellen, deren Hohlräume durch Öffnungen in den Wänden der jeweiligen Zellen miteinander verbunden sind, werden vorliegend auch als "offene Zellen" bezeichnet. Offenzellige Materialien, vorzugsweise offenzellige Materialien mit benetzbaren Zellwänden, sind in der Regel in der Lage durch Kapillarwirkung Flüssigkeiten aufzusaugen. Ein offenzelliges Material enthält mehr als 50 % offene Zellen (bezogen auf die Gesamtzahl der Zellen in dem offenzelligen Material). Demzufolge können auch geschlossene Zellen in dem offenzelligen Material enthalten sein.

Unter "geschlossenen Zellen" werden im Rahmen der vorliegenden Erfindung Zellen verstanden, deren Hohlräume nicht durch Öffnungen in den Wänden der jeweiligen Zellen miteinander verbunden sind. Im Rahmen der vorliegenden Erfindung enthält ein offenzelliges Material immer mehr offene Zellen als geschlossene Zellen (bezogen auf die Gesamtzahl der Zellen).

Vorzugsweise enthält das offenzellige Material mindestens 60 %, bevorzugt mindestens 80 %, mehr bevorzugt mindestens 90 %, offene Zellen, bezogen auf die Gesamtzahl der Zellen in dem offenzelligen Material.

Ein "geschlossenzelliges Material" enthält mehr als 50 % geschlossene Zellen (bezogen auf die Gesamtzahl der Zellen in dem geschlossenzelligen Material).

Demzufolge können auch offene Zellen in dem geschlossenzelligen Material enthalten sein. Im Rahmen der vorliegenden Erfindung enthält ein geschlossenzelliges Material immer mehr geschlossene Zellen als offene Zellen (bezogen auf die Gesamtzahl der Zellen).

Vorzugsweise enthält das geschlossenzellige Material mindestens 80 %, bevorzugt mindestens 90 %, mehr bevorzugt mindestens 95 %, geschlossene Zellen, bezogen auf die Gesamtzahl der Zellen in dem geschlossenzelligen Material.

Offen- beziehungsweise geschlossenzellige Materialen als solche, sowie deren Herstellungsverfahren sind dem Fachmann bekannt, sie können beispielsweise über Schäumprozesse hergestellt werden. Dabei wird üblicherweise in einem ersten Schritt Gas in geeignete Flüssigkeiten, vorzugsweise in aufgeschmolzene Polymere oder Polymervorstufen, eingeblasen, oder man erreicht die Schaumbildung durch heftiges Schlagen, Schütteln, Verspritzen oder Rühren der Flüssigkeit in einer Gasatmosphäre. Danach erfolgt üblicherweise in einem zweiten Schritt die Aushärtung der Flüssigkeit unter Erhalt eines offen- beziehungsweise geschlossenzelligen Materials. Ob ein (überwiegend) offen- oder ein geschlossenzelliges Material resultiert, hängt unter anderem vom Flüssigkeitsvolumen, den mechanischen Bedingungen, dem Druck und der Temperatur ab.

Der prozentuale Anteil der offenen beziehungsweise geschlossenen Zellen, bezogen auf die Gesamtzahl der Zellen in dem offenzelligen Material, kann mittels Gaspyknometrie nach DIN ISO 4590 (2003) bestimmt werden. Dazu wird zuerst ein geometrischer Körper (Quader, Würfel oder auch Zylinder), das Probenstück, geschnitten und beispielsweise mit Hilfe genauer Ausmessung mittels Mikrometerschraube dessen exaktes geometrisches Volumen bestimmt. Danach wird das Probenstück mit einem Gaspyknometer bei einem geringen Druck von 0,25 bar vermessen. Als Messgas wird Stickstoff verwendet. Mit dieser Messung wird das Volumen des Probenkörpers erhalten, in den sich das Messgas nicht ausbreiten kann, also das geschlossene Volumen zur Bestimmung des Anteils der geschlossenen Zellen. Der Quotient aus geschlossenem zu geometrischem Volumen multipliziert mit 100 % ergibt den prozentualen Anteil der geschlossenen Zellen in dem Probenstück.

Nachfolgend werden das erfindungsgemäße Herstellungsverfahren der zumindest zweilagigen Platten sowie die erfindungsgemäßen zumindest zweilagigen Platten als solche näher definiert.

Die mit dem erfindungsgemäßen Verfahren hergestellte Platte ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der Platte als solche aus der Anzahl der dünneren Platten (TS) und (OZ), die miteinander verbunden, vorzugsweise miteinander thermisch verschweißt werden. Die dünneren Platten werden auch als Ausgangsplatten bezeichnet. Im Falle einer zweilagigen Platte als solche, werden also zwei dünnere Platten, eine erste dünnere thermoplastische Platte und eine zweite dünnere Platte, die aus einem offenzelligen Material hergestellt ist, miteinander verbunden, vorzugsweise thermisch verschweißt. Bei einer drei- oder vierlagigen Platte als solche, werden somit drei bzw. vier dünnere Platten miteinander verbunden, insbesondere thermisch verschweißt.

Sofern noch höherlagige Platten als solche hergestellt werden sollen, beispielsweise eine zehnlagige Platte, müssen demzufolge die der Anzahl der Lagen entsprechende Anzahl an dünneren Platten (TS) und (OZ), beispielsweise zehn dünnere Platten, miteinander verbunden werden. Vorzugsweise ist die erfindungsgemäße Platte zweilagig, dreilagig oder vierlagig, insbesondere ist die erfindungsgemäße Platte dreilagig. Das Verbinden, insbesondere das thermische Verschweißen als solches (Durchführung), wird weiter unten im Text im Zusammenhang mit dem erfindungsgemäßen Herstellungsverfahren näher definiert.

Voraussetzung bei jeder zumindest zweilagigen Platte, die nach dem erfindungsgemäßen Verfahren hergestellt wird, ist, dass in der entsprechenden Anzahl an Lagen (also die konkrete Anzahl an dünneren Ausgangsplatten (OZ) und (TS)) immer mindestens eine dünnere thermoplastische Schaumstoffplatte (TS) und mindestens eine dünnere Platte (OZ) als Ausgangsplatten verwendet werden. Während die dünnere Ausgangsplatte (TS) zwingend thermoplastisch ist, ist dies bei der dünneren Ausgangspatte (OZ) nicht der Fall. Die dünnere Platte (OZ) ist hingegen aus einem offenzelligen Material hergestellt. Die dünnere Platte (OZ) kann gegebenenfalls über thermoplastische Bestandteile in geringen Mengen verfügen, vorzugsweise ist die dünnere Platte (OZ) jedoch weitgehend, insbesondere vollständig, frei von thermoplastischen Bestandteilen. Im Gegensatz dazu kann die dünnere Ausgangsplatte (TS) ebenfalls geringe Anteile an offenzelligem Material aufweisen, vorzugsweise ist die dünnere Ausgangsplatte (TS) jedoch weitgehend, insbesondere vollständig, frei von einem solchen offenzelligen Material.

In einer bevorzugten Ausführungsform der Erfindung wird eine dreilagige Platte hergestellt durch Verbinden, vorzugsweise durch thermisches Verschweißen von zwei dünneren thermoplastischen Schaumstoffplatten (TS) und einer dünneren Platte (OZ), wobei jeweils eine dünnere thermoplastische Schaumstoffplatte (TS) auf jeweils einer sich gegenüberliegenden Seite der dünneren Platte (OZ) unter Erhalt der dreilagigen Platte aufgebracht wird.

In einer weiteren bevorzugten Ausführungsform der vorliegenden Erfindung wird aus einer vorstehend beschriebenen dreilagigen Platte eine vier- oder höherlagige Platte (vorzugsweise durch thermisches Verschweißen), hergestellt. Dabei wird ausgehend von der vorstehend beschriebenen dreilagigen Platte eine zweite dünnere Platte (OZ) auf eine von einer dünneren thermoplastischen Schaumstoffplatte (TS) stammenden Seite der dreilagigen Platte aufgebracht, wobei die daraus erhaltene vierlagige Platte abwechselnd insgesamt vier Lagen aus dünneren thermoplastischen Schaumstoffplatten (TS) und dünneren Platten (OZ) aufweist und die erste und zweite dünnere Platte (OZ) sich auf jeweils einer gegenüberliegenden Seite einer dünneren thermoplastischen Schaumstoffplatte (TS) befinden, wobei gegebenenfalls zum Erhalt von höherlagigen Platten das abwechselnde Aufbringen einer weiteren dünneren thermoplastischen Schaumstoffplatte (TS) oder einer dünneren Platte (OZ) mindestens einfach wiederholt wird.

Die zum Verbinden verwendeten dünneren Ausgangsplatten (TS) und (OZ) entsprechen hinsichtlich ihrer chemischen Zusammensetzung den im Rahmen der vorliegenden Erfindung hergestellten zumindest zweilagigen Platten als solche. Bei dieser Betrachtungsweise werden jedoch beispielsweise Klebstoffe, die bei einem etwaigen Verbinden der dünneren Ausgangsplatten durch Verkleben auf die jeweiligen Oberflächen der dünneren Ausgangsplatten aufgebracht werden, nicht berücksichtigt. Sinngemäßes gilt auch für etwaige sonstige auf die Oberflächen der Ausgangsplatten aufgebrachte Komponenten wie Absorber von elektromagnetischer Strahlung oder Flammschutzmittel. Ebenso wenig werden bei dieser Betrachtungsweise die bei einem Verbinden durch thermisches Verschweißen infolge der Ausbildung der Schweißnaht an den entsprechenden Oberflächen auftretenden chemischen Veränderungen/ Reaktionen mitberücksichtigt. Die jeweils miteinander zu verbindenden, vorzugsweise thermisch zu verschweißenden, dünneren Ausgangsplatten weisen vorzugsweise dieselben Dimensionen auf. Vorzugsweise erfolgt das Verbinden an den jeweils flächenmäßig größten Seiten der jeweiligen Ausgangsplatten.

Die Dimensionierung der miteinander zu verbindenden dünneren Platten (TS) und (OZ) ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. In der Praxis weisen die dünneren Platten eine Dicke im Bereich von 2 bis 400 mm auf.

Bezogen auf ein rechtwinkliges Koordinatensystem wird erfindungsgemäß die Länge einer Ausgangsplatte bzw. einer zumindest zweilagigen Platte als solche auch als "x-Richtung" bezeichnet, die entsprechende Breite als "y-Richtung" und die Dicke als "z-Richtung". Die Dicke der zumindest zweilagigen Platte steigt mit zunehmender Anzahl von verbundenen Ausgangsplatten kontinuierlich an.

Die vorstehend bzw. nachfolgend angegebenen Werte hinsichtlich der Dicke der dünneren Platten (TS) und (OZ) beziehen sich auf die entsprechenden Werte einer Ausgangsplatte, die für sich genommen noch keinen Verbindungsschritt, insbesondere keinen thermischen Verschweißungsschritt, erfahren hat.

Die Dicke der im erfindungsgemäßen Verfahren hergestellten zumindest zweilagigen Platten ergibt sich somit aus der Gesamtdicke der insgesamt eingesetzten dünneren Platten (Ausgangsplatten). Bei der Ausführungsform des thermischen Verschweißens werden die jeweils miteinander zu verschweißenden Oberflächen der thermoplastischen Ausgangsplatten zumindest etwas auf- oder angeschmolzen (Aufschmelzschritt), was in Abhängigkeit von den übertragenen Energiemengen zu einer gewissen Reduzierung der Dicke der jeweiligen thermoplastischen Ausgangsplatten führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit der Übertragung einer großen Energiemenge durchgeführt wird, ist die Dicke der zumindest zweilagigen Platte als solche geringer als die Summe der jeweiligen Dicken der eingesetzten Ausgangsplatten. Sinngemäßes gilt auch bei Verpressen von miteinander verklebten Ausgangsplatten.

Vorzugsweise weist die mindestens eine dünnere thermoplastische Schaumstoffplatte (TS) eine Länge (x-Richtung) von 500 bis 2 800 mm, vorzugsweise von 1 000 bis 1500 mm, eine Breite (y-Richtung) von 200 bis 1 250 mm, vorzugsweise von 500 bis 900 mm, und eine Dicke (z-Richtung) von 2 bis 100 mm, vorzugsweise von 5 bis 50 mm, auf.

Vorzugsweise weist die mindestens eine dünnere Platte (OZ) eine Länge (x-Richtung) von 500 bis 2 800 mm, vorzugsweise von 1 000 bis 1 500 mm, eine Breite (y-Richtung) von 200 bis 1 250 mm, vorzugsweise von 500 bis 900 mm, und eine Dicke (z-Richtung) von 10 bis 400 mm, vorzugsweise von 20 bis 200 mm, auf.

Weiterhin ist es bevorzugt, dass jede dünnere thermoplastische Schaumstoffplatte (TS) und jede dünnere Platte (OZ) identische Werte für die Länge (x-Richtung) und die Breite (y-Richtung) aufweisen.

Weiterhin ist es bevorzugt, dass die mindestens eine dünnere thermoplastische Schaumstoffplatte (TS) und die mindestens eine dünnere Platte (OZ) über jeweils eine der beiden flächenmäßig größten Seiten (xy-Ebene) der entsprechenden Platte miteinander verbunden werden, besonders bevorzugt weisen die miteinander zu verbindenden Platten identische Länge- und Breitedimensionen auf.

Vorzugsweise weist die zumindest zweilagige Platte eine Wärmeleitfähigkeit λ ≤ 0,030 W/(mK), vorzugsweise ≤ 0,025 W/(mK), insbesondere ≤ 0,020 W/(mK), auf. Die entsprechenden Wärmeleitfähigkeitswerte gelten dabei für die gesamte zumindest zweilagige Platte, vorzugsweise für eine zweilagige oder eine dreilagige Platte. Die Wärmeleitfähigkeit im Rahmen der vorliegenden Erfindung wird an der ganzen zumindest zweilagigen Platte nach EN 12667 oder EN 12939 bei einer Mitteltemperatur von 10 ± 0,3 °C gemessen (nach Lagerung von 6 h bei 23 °C und 50 % Luftfeuchte).

Die dünneren thermoplastischen Schaumstoffplatten (TS) als solche sind dem Fachmann prinzipiell bekannt. Geeignete thermoplastische Schaumstoffplatten sind beispielsweise in Form von Blends in der WO 2009/047487 offenbart. Beispielsweise können Platten aus amorphen, kristallinen oder teilkristallinen thermoplastischen Schaumstoffen eingesetzt werden.

Vorzugsweise ist die mindestens eine dünnere thermoplastische Schaumstoffplatte (TS) aus einem geschlossenzelligen Material hergestellt, das mindestens 80 %, bevorzugt mindestens 90 %, mehr bevorzugt mindestens 95 % geschlossene Zellen, bezogen auf die Gesamtzahl der Zellen in dem geschlossenzelligen Material, enthält.

Vorzugsweise ist die dünnere thermoplastische Schaumstoffplatte (TS) ein Partikelschaumstoff oder ein Extrusionsschaumstoff auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der dünneren thermoplastischen Schaumstoffplatte (TS) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Ist die dünnere thermoplastische Schaumstoffplatte (TS) ein Partikelschaumstoff, so ist der Partikelschaumstoff vorzugsweise Styropor oder Neopor, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als "Blends" bezeichnet. Als mindestens ein weiteres Polymer eignen sich alle dem Fachmann bekannten Polymere, wie beispielsweise die vorstehend beschriebenen Polymere.

Am meisten bevorzugt ist die dünnere thermoplastische Schaumstoffplatte (TS) ein Extrusionsschaumstoff aus einem extrudierten Polystyrol, der beispielsweise unter der Bezeichnung "Styrodur" von der BASF SE kommerziell erhältlich ist.

Sofern die dünnere thermoplastische Schaumstoffplatte (TS) ein Extrusionsschaumstoff ist, wird vorzugsweise an denjenigen Seiten (Oberflächen), die mit einer anderen Ausgangsplatte verbunden werden sollen, die Schäumhaut entfernt. Gegebenenfalls kann dies auch an den sonstigen Seiten (Oberflächen) der entsprechenden Ausgangsplatte durchgeführt werden. Das Entfernen der Schäumhaut (die auch als "Extrusionshaut" bezeichnet wird) als solches ist dem Fachmann bekannt. Dies bedeutet, dass die entsprechende Ausgangsplatte an den zu verbindenden Oberflächen, vorzugsweise an den thermisch zu verschweißenden Seiten (Oberflächen), schäumhautfrei ist.

Vorzugsweise ist die dünnere thermoplastische Schaumstoffplatte (TS) zu mindestens 90 Gew.-%, bevorzugt zu mindestens 95 Gew.-%, besonders bevorzugt zu 98 Gew.-%, aus mindestens einem Thermoplast hergestellt (bezogen auf das Gesamtgewicht der dünneren thermoplastischen Schaumstoffplatte (TS)).

Weitere Komponenten, die in der dünneren thermoplastischen Schaumstoffplatte (TS) enthalten sein können, die also beispielsweise bei deren Herstellungsprozess in das Volumen der Platte integriert werden, können beispielsweise Flammschutzmittel, Nukleierungsmittel, Farbstoffe, IR-Absorber oder sonstige Additive sein. Die vorgenannten Komponenten sind allesamt dem Fachmann bekannt Sofern beim Herstellungsprozess der entsprechenden thermoplastischen Platte Treibmittel eingesetzt werden, beispielsweise im Rahmen eines Extrusionsverfahrens, werden diese Treibmittel bei der Bestimmung des vorgenannten Gesamtgewichts der dünneren thermoplastischen Schaumstoffplatte (TS) nicht mitberücksichtigt. Diese ist insbesondere dadurch begründet, dass Treibmittel mit der Zeit aus der entsprechenden Platte ausdiffundieren. Demzufolge werden bei der Bestimmung des Gesamtgewichts der dünneren thermoplastischen Schaumstoffplatte (TS) nur diejenigen Komponenten/Verbindungen mitberücksichtigt, die keine Gase sind und folglich dauerhaft in der entsprechenden dünneren Ausgangsplatte vorhanden sind und die nicht ausdiffundieren können.

Die dünnere thermoplastische Schaumstoffplatte (TS) kann prinzipiell beliebige Werte hinsichtlich des mittleren Zelldurchmessers (auch als "Zellgröße" oder "mittlere Zellgröße" bezeichnet) aufweisen. In der Praxis weisen thermoplastische Schaumstoffplatten einen mittleren Zelldurchmesser auf, der größer ist als 1 µm (entspricht 1 000 nm). Der mittlere Zelldurchmesser kann nach der Norm "ASTM D 3576" (Bestimmung der Zellgröße von harten Schaumstoffen; Ausgabe 2015), also nach dem Fachmann bekannten Methoden gemessen werden. Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Treibmittels und/oder die Art oder Menge von Nukleierungsmittel, beispielsweise während des Extrusionsverfahrens.

Vorzugsweise weist die dünnere thermoplastische Schaumstoffplatte (TS) einen mittleren Zelldurchmesser ≥ 10 µm, vorzugsweise ≥ 50 µm und besonders bevorzugt ≥ 100 µm auf. Die Obergrenze des mittleren Zelldurchmessers der dünneren thermoplastischen Schaumstoffplatte (TS) beträgt in der Regel nicht mehr als 500 µm, vorzugsweise maximal 250 µm.

Die dünneren thermoplastischen Schaumstoffplatten (TS) können prinzipiell beliebige Dichten aufweisen. Vorzugsweise beträgt die Dichte der dünneren thermoplastischen Schaumstoffplatten (TS) 10 bis 500 g/l, mehr bevorzugt 15 bis 200 g/l, insbesondere 20 bis 150 g/l.

Weiterhin ist es bevorzugt, dass die dünnere Schaumstoffplatte (TS) eine Wärmeleitfähigkeit λ ≤ 0,035 W/(mK), vorzugsweise ≤ 0,030 W/(mK) aufweist. Die Wärmeleitfähigkeit der dünneren Schaumplatte (TS) wird vor Herstellung der zumindest zweilagigen Platte nach EN 12667 oder EN 12939 bei einer Mitteltemperatur von 10 ± 0,3 °C bestimmt.

Die im erfindungsgemäßen Verfahren eingesetzte mindestens eine dünnere Platte (OZ) als solche, die aus einem offenzelligen Material hergestellt ist, ist dem Fachmann ebenfalls bekannt. Vorzugsweise weist das offenzellige Material mindestens 60 %, bevorzugt mindestens 80 %, mehr bevorzugt mindestens 90 % offene Zellen auf, bezogen auf die Gesamtzahl der Zellen in dem offenzelligen Material.

Das offenzellige Material kann prinzipiell beliebige Dichten aufweisen. Vorzugsweise weist das offenzellige Material eine Dichte von ≤ 100 g/l, bevorzugt von ≤ 60 g/l, mehr bevorzugt von ≤ 30 g/l, auf.

Das offenzellige Material ist vorzugsweise ein offenzelliger Schaumstoff.

Offenzellige Schaumstoffe als solche sowie Verfahren zu deren Herstellung sind dem Fachmann bekannt. Sie sind beispielsweise im Kunststoff-Handbuch, Band 7: Polyurethane von G. Oertel, Carl Hanser Verlag, München 1993, und im Kunststoff-Handbuch, Band 10: Duroplaste von G. W. Becker et al, Carl Hanser Verlag, München 1988, beschrieben.

Unter dem Begriff "offenzelliger Schaumstoff" wird im Rahmen der vorliegenden Erfindung vorzugsweise ein offenzelliger elastomerer, ein offenzelliger thermoplastischer oder ein offenzelliger duroplastischer Schaumstoff verstanden.

Mehr bevorzugt ist der offenzellige Schaumstoff ein offenzelliger duroplastischer Schaumstoff, besonders bevorzugt ein offenzelliger Polyurethan-Schaumstoff oder ein offenzelliger Melaminharz-Schaumstoff.

Beispielsweise können solche offenzelligen Schaumstoffe über ein Schlagschaumverfahren hergestellt werden. Dabei wird zur Schaumbildung üblicherweise in einem ersten Schritt Luft und/oder ein Gas in eine Polymerschmelze eingeschlagen oder eingeblasen. In einem zweiten Schritt erfolgt üblicherweise die Aushärtung der geschäumten Polymerschmelze. Die so hergestellten offenzelligen Schaumstoffe werden vorliegend auch als mechanische Schlagschäume bezeichnet.

Beispiele für solche mechanischen Schlagschäume sind offenzellige elastomere Latex-Schaumstoffe und offenzellige duroplastische Schaumstoffe.

Ein weiteres mögliches Verfahren zur Herstellung solcher offenzelliger Schaumstoffe ist das Mischverfahren. Bei dieser Methode werden üblicherweise mindestens zwei flüssige, reaktive Komponenten sowie ein Treibmittel in eine Form eingebracht, wo gasfreisetzende und vernetzende chemische Reaktionen parallel zueinander ablaufen. Die so hergestellten offenzelligen Schaumstoffe werden vorliegend auch als Reaktivschäume bezeichnet.

Beispiele für solche Reaktivschäume sind offenzellige duroplastische Schaumstoffe wie Polyurethan-Schaumstoffe.

Ein weiteres Verfahren zur Herstellung offenzelliger Schaumstoffe ist das Expansionsverfahren, das auf der Expansion einer gasförmigen Phase, die in einer Polymerschmelze dispergiert ist, beruht. Dieses Verfahren wird üblicherweise zur Herstellung von thermoplastischen offenzelligen Schaumstoffen verwendet.

Sofern das offenzellige Material der dünneren Platte (OZ) ein offenzelliger duroplastischer Schaumstoff ist, wird dieser üblicherweise durch die vorstehend beschriebenen Verfahren zur Herstellung offenzelliger Schaumstoffe hergestellt, vorzugsweise durch das Mischverfahren. Dabei wird vorzugsweise eine reaktive Mischung umgesetzt enthaltend mindestens eine Komponente (K1) und mindestens eine Komponente (K2), wobei die Komponente (K1) mindestens ein Isocyanat umfasst und die Komponente (K2) ausgewählt ist aus mindestens einem Polyetherpolyol, einem Polyesterpolyol oder einem Polyamin.

Als erste Komponente (K1) geeignete Isocyanate weisen bevorzugt einen Isocyanatindex im Bereich von 100 bis 400, besonders bevorzugt im Bereich von 100 bis 300, insbesondere bevorzugt im Bereich von 100 bis 200, auf.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter "mit Isocyanat reaktiven Gruppen" werden dabei alle in der reaktiven Mischung enthaltenen gegenüber Isocyanat reaktiven Gruppen, einschließlich gegebenenfalls chemischer Treibmittel und Verbindungen mit Epoxidgruppen, verstanden, nicht aber die Isocyanatgruppe selbst.

Als zweite Komponente (K2) wird bevorzugt mindestens eine Verbindung mit gegenüber Isocyanaten reaktiven Gruppen eingesetzt. Derartige Verbindungen sind dem Fachmann bekannt.

Als Verbindung mit gegenüber Isocyanaten reaktiven Gruppen können beispielsweise alle Verbindungen eingesetzt werden, die zumindest zwei gegenüber Isocyanaten reaktive Gruppen wie OH-, SH-, NH- und/oder CH-azide Gruppen aufweisen.

Bevorzugt als zweite Komponente (K2) ist eine Verbindung mit gegenüber Isocyanaten reaktiven Gruppen, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist, und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist.

Polyetherpolyole als solche sind dem Fachmann bekannt und können nach bekannten Verfahren hergestellt werden, beispielsweise durch anionische Polymerisation von Alkylenoxiden unter Zusatz mindestens eines Startermoleküls, das vorzugsweise 2 bis 6 reaktive Wasserstoffatome gebunden enthält, in Gegenwart von Katalysatoren. Als Katalysatoren können Alkalihydroxide wie beispielsweise Natrium- oder Kaliumhydroxid oder Alkalialkoholate wie Natriummethylat, Natrium- oder Kaliumethylat oder Kaliumisopropylat eingesetzt werden. Bei kationischer Polymerisation werden als Katalysatoren beispielsweise Lewis-Säuren wie Ammoniumpentachlorid, Bortrifluridetherat oder Bleicherde eingesetzt. Weiter können als Katalysatoren auch Doppelmetallcyanidverbindungen, sogenannte DMC-Katalysatoren, sowie aminbasierte Katalysatoren eingesetzt werden.

Vorzugsweise werden als Alkylenoxide eine oder mehrere Verbindungen mit zwei bis vier Kohlenstoffatomen im Alkylenrest wie beispielsweise Ethylenoxid, Tetrahydrofuran, 1,2-Propylenoxid, 1,3-Propylenoxid, 1,2-Butylenoxid, 2,3-Butylenoxid sowie Mischungen daraus, eingesetzt. Bevorzugt werden Ethylenoxid und/oder 1,2-Propylenoxid eingesetzt.

Als Startermoleküle kommen beispielsweise Ethylenglycol, Diethylenglycol, Propylenglycol, Dipropylenglycol, Glyzerin, Trimethylolpropan, Pentaerythrit, Zuckerderivate wie Saccharose, Hexitderivate wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere dem Fachmann bekannte zwei- oder mehrwertige Alkohole oder ein- oder mehrwertige Amine in Betracht.

Als Polyesterpolyole eignen sich alle dem Fachmann bekannten Polyesterpolyole. Beispielsweise können geeignete Polyesterpolyole durch Kondensation von mehrfunktionellen Alkoholen mit zwei bis zwölf Kohlenstoffen wie Ethylenglycol, Diethylenglycol, Butandiol, Trimethylolpropan, Glyzerin oder Pentaerythrit, mit mehrfunktionellen Carbonsäuren mit zwei bis zwölf Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren, den Anhydriden der genannten Säuren sowie Mischungen daraus, hergestellt werden. Bevorzugt werden aromatische Disäuren wie Phthalsäure, Isophthalsäure und/oder Terephthalsäure sowie deren Anhydride als Säurekomponente und Ethylenglycol, Diethylenglycol, 1,4-Butandiol und/oder Glyzerin als Alkoholkomponente eingesetzt.

Darüber hinaus können zur Herstellung der Polyesterpolyole anstatt der mehrfunktionellen Carbonsäuren auch entsprechende monomere Ester wie zum Beispiel Dimethylterephthalat oder polymere Ester wie zum Beispiel Polyethylenterephthalat eingesetzt werden.

Als Polyamine eignen sich alle dem Fachmann bekannten Polyamine. Geeignete Polyamine sind sowohl aliphatische Polyamine als auch aromatische Polyamine. Bevorzugt sind aliphatische Polyamine, die im Rahmen der vorliegenden Erfindung auch als "Polyalkylenpolyamine" bezeichnet werden.

Unter dem Begriff "Polyalkylenpolyamin" werden im Rahmen der vorliegenden Erfindung aliphatische Amine verstanden, die mindestens drei Aminogruppen (primär, sekundär oder tertiär) enthalten.

Als Polyalkylenpolyamine sind Polyethylenimine besonders bevorzugt. Unter "Polyethyleniminen" werden im Rahmen der vorliegenden Erfindung sowohl Oligomere als auch Homo- und Copolymere verstanden, welche die Gruppierungen -H₂-CH₂-NH-aufweisen und mindestens drei Aminogruppen enthalten.

Die erste Komponente (K1) und die zweite Komponente (K2) können miteinander reagieren. Diese Reaktionen sind dem Fachmann als solche bekannt.

Bei der Reaktion der ersten Komponente (K1) mit der zweiten Komponente (K2) bilden sich beispielsweise Polyurethane, Polyisocyanurate oder Polyharnstoffe, bevorzugt bilden sich Polyisocyanate oder Polyurethane, am meisten bevorzugt bilden sich Polyurethane. Dem Fachmann sind diese Reaktionen bekannt.

Beispielsweise bilden sich Polyurethane, wenn als erste Komponente (K1) Isocyanate eingesetzt werden und als zweite Komponente (K2) Polyetherpolyole. Polyisocyanurate bilden sich bei dem Einsatz von Isocyanaten als erste Komponente (K1) und Polyesterpolyolen als zweite Komponente (K2). Polyharnstoffe werden erhalten durch die Reaktion von Isocyanaten als erste Komponente (K1) und Polyaminen als zweite Komponente (K2).

Darüber hinaus können in der reaktiven Mischung, die zur Herstellung des offenzelligen duroplastischen Schaumstoffs eingesetzt wird, weitere dem Fachmann bekannte Vernetzer enthalten sein.

Weiterhin ist es bevorzugt, dass das offenzellige Material der dünneren Platte (OZ) ein offenzelliger duroplastischer Schaumstoff ist, der erhalten wird durch Umsetzung einer reaktiven Mischung enthaltend als Komponente (K1) mindestens ein Isocyanat, ausgewählt aus Toluoldüsocyanat (TDI), Diphenylmethandüsocyanat (MDI), polymeren Diphenylmethandüsocyanaten (PMDI) und Mischungen daraus, und als Komponente (K2) mindestens ein Polyetherpolyol und/oder mindestens ein Polyesterpolyol.

Vorzugsweise enthält der duroplastische Schaumstoff mindestens ein Treibmittel. Treibmittel als solche sind dem Fachmann bekannt.

Bei den Treibmitteln handelt es sich vorzugsweise um chemische Treibmittel. Unter chemischen Treibmitteln versteht man Verbindungen, die bei der Herstellung des duroplastischen Schaumstoffs mit den entsprechenden Edukten, beispielsweise einem Isocyanat, bei den entsprechenden Reaktionstemperaturen gasförmige Produkte bilden. Ein Beispiel für ein chemisches Treibmittel ist Wasser oder Ameisensäure.

Das Verbinden der dünneren Ausgangsplatten (TS) und (OZ) zu der zumindest zweilagigen Platte als solche kann prinzipiell nach beliebigen dem Fachmann bekannten Verfahren durchgeführt werden. Das Verbinden kann beispielsweise in Form von Quellschweißen, Lösungsmittelschweißen, Verkleben und/oder thermischem Verschweißen durchgeführt werden. Vorzugsweise erfolgt im Rahmen der vorliegenden Erfindung das Verbinden der dünneren thermoplastischen Platte (TS) und der dünneren Platte (OZ) durch thermisches Verschweißen.

Sofern das Verbinden der jeweiligen Ausgangsplatten (OZ) und (TS) durch Verkleben durchgeführt wird, kann die Durchführung des Klebevorgangs bzw. die Auswahl geeigneter Klebstoffe gemäß der Offenbarung der deutschen Patentanmeldung DE 10 2012 023180.6 durchgeführt werden.

Das Verbinden der Ausgangsplatten in Form von thermischem Verschweißen kann ebenfalls nach allen dem Fachmann bekannten Arten durchgeführt werden. Entsprechende Verfahren zum thermischen Verschweißen sind beispielsweise in WO 2015/011016 beschrieben.

Der Effekt des Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das Verschweißen mit einer Vorrichtung ausgewählt aus einem Heizschwert, einem Heizgitter oder einer Heizplatte durchgeführt, wobei die Vorrichtung gegebenenfalls mit Noppen oder Rillen versehen sein kann. Beispielsweise kann das Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum Verschweißen Noppen oder Rillen aufweist, können auf diese Weise auch strukturierte Vertiefungen auf die entsprechende Oberfläche der zu verbindenden Schaumstoffplatten aufgebracht werden. Anstelle der Verwendung einer Vorrichtung wie eines Heizschwerts oder eines Heizgitters ist es auch möglich, das Verschweißen, also die Wärmezufuhr, unter Verwendung von elektromagnetischer Strahlung teilweise oder vollständig durchzuführen.

Durch das thermische Verschweißen bildet sich zwischen den zu verschweißenden Oberflächen (der Ausgangsplatten) eine Schweißnaht aus. Anstelle des Begriffs "Schweißnaht" können auch die Begriffe "Schweißhaut" oder "Schweißzone" verwendet werden. Die Schweißnaht kann in Abhängigkeit des verwendeten Verschweißungsverfahrens prinzipiell eine beliebige Dicke annehmen, vorzugsweise ist die Dicke der Schweißnaht jedoch nicht allzu groß, also nicht größer als 500 µm.

Die im Rahmen der vorliegenden Erfindung für die Dicke einer Schweißnaht aufgeführten Zahlenwerte sind als Durchschnittswerte zu verstehen, wobei vorzugsweise zur Ermittlung eines solchen Durchschnittswerts fünf Messpunkte, die über die gesamte Länge der Schweißnaht verteilt sind und die durch Lichtmikroskopie bestimmt werden, herangezogen werden. Erfindungsgemäß erstrecken sich die vorgenannten Werte hinsichtlich der Schweißnahtdicke über den kompletten Umfang der Schweißnaht.

Im Rahmen der vorliegenden Erfindung ist es weiterhin bevorzugt, dass das Verbinden durch thermisches Verschweißen erfolgt und eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird.

Im Rahmen der vorliegenden Erfindung wird beim thermischen Verschweißen mindestens ein Heizelement eingesetzt. Gegebenenfalls können aber auch zwei oder mehrere Heizelemente verwendet werden. Dabei kann es sich um dieselben Heizelemente oder um unterschiedliche Heizelemente handeln. In einer Ausführungsform der vorliegenden Erfindung ist es bevorzugt, dass mindestens zwei Heizelemente verwendet werden. Vorzugsweise werden die Heizelemente auf zueinander parallelen Ebenen eingesetzt. Vorzugsweise erfolgt das thermische Verschweißen als kontaktloses Verschweißen, das heißt, die Oberflächen des Heizelements und die Oberflächen der zu verschweißenden Platten berühren sich nicht.

Weiterhin ist es bevorzugt, dass die Heizelemente Heizplatten sind, vorzugsweise IR-Strahler mit einer Oberflächentemperatur von 200 bis 1 000 °C, insbesondere von 300 bis 700 °C.

In einer bevorzugten Ausführungsform der vorliegenden Erfindung wird das thermische Verschweißen nach einem Verfahren durchgeführt, das die folgenden Schritte a) bis e) umfasst:
a) eine dünnere thermoplastische Schaumstoffplatte (TS) und eine dünnere Platte (OZ) werden in einem Abstand a parallel zueinander ausgerichtet, sodass sie einen Zwischenraum ausbilden,
b) in den Zwischenraum werden mindestens zwei Heizelemente auf parallel zueinander versetzten Ebenen und parallel zu den beiden dünneren Platten (TS) und (OZ) eingeführt, wobei sich die Oberflächen der beiden dünneren Platten (TS) und (OZ) und die Heizelemente nicht gegenseitig berühren,
c) die Heizelemente werden so weit zwischen die beiden dünneren Platten (TS) und (OZ) eingeführt, bis zwischen den beiden dünneren Platten (TS) und (OZ), bezogen auf jede Stelle der jeweiligen Oberfläche der beiden dünneren Platten (TS) und (OZ), zumindest zeitweise sich mindestens eines der Heizelemente befunden hat,
d) die Heizelemente werden vollständig aus dem Zwischenraum wieder entfernt,
e) mindestens eine der beiden dünneren Platten (TS) und (OZ) wird gegen die Oberfläche der jeweiligen anderen dünneren Platte (TS) und (OZ) gedrückt.

Der Abstand a ist in Schritt a) dabei so gewählt, dass mindestens zwei Heizelemente zwischen den entsprechenden Ausgangsplatten in parallel zueinander versetzten Ebenen so bewegt werden können, dass sie die Oberflächen der entsprechenden Ausgangsplatten nicht berühren (siehe auch Ausführungen zum nachfolgenden Schritt b)). Dabei weisen die Heizelemente auch einen gewissen Abstand zueinander auf, um ein reibungsloses Ein- und Ausführen der Heizelemente zu gewährleisten. Der Abstand a ist umso größer, je höher die Anzahl an Heizelementen im erfindungsgemäßen Verfahren ist, die auf parallel zueinander versetzten Ebenen in den Zwischenraum ein- und aus diesem ausgeführt werden.

Vorzugsweise beträgt in Schritt a) der Abstand a 10 bis 150 mm, insbesondere 15 bis 80 mm.

In Schritt b) dieser Ausführungsform des erfindungsgemäßen Verfahrens werden in den Zwischenraum mindestens zwei Heizelemente auf parallel zueinander versetzten Ebenen und parallel zu den beiden dünneren Schaumstoffplatten eingeführt, wobei sich die Oberflächen der beiden dünneren Schaumstoffplatten und die Heizelemente nicht gegenseitig berühren.

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Vorzugsweise werden erfindungsgemäß zwei Heizelemente verwendet, weiterhin ist es bevorzugt, dass die Heizelemente Heizplatten sind. Sofern mehr als zwei Heizelemente verwendet werden, ist es bevorzugt, eine gerade Anzahl von Heizelementen auf parallel zueinander versetzten Ebenen einzusetzen. Bevorzugte Heizplatten sind IR-Strahler mit einer Oberflächentemperatur von 200 bis 1 000 °C, insbesondere von 300 bis 700 °C. Sie können beispielsweise in der Außenposition (Ruheposition) vorgeheizt werden oder elektrisch über Widerstandsheizungen oder mittels Wärmeträgerölen erhitzt werden.

Vorzugsweise werden erfindungsgemäß zwei identische Heizelemente, insbesondere Heizplatten, verwendet, gegebenenfalls können die Heizelemente auch hinsichtlich ihrer Beschaffenheit, insbesondere Dicke, unterschiedlich geartet sein. Die Dimensionen der Heizelemente werden in Abstimmung mit den entsprechenden Dimensionen der zu verschweißenden Ausgangsplatten gewählt. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechenden Dimensionierungen der zu verschweißenden Ausgangsplatten sein. Bevorzugt ist, dass die Heizelemente, insbesondere Heizplatten, in ihrer Länge (x-Richtung) jeweils gleich groß oder maximal 35 % größer sind als die entsprechenden Längen (x-Richtung) der zwei dünneren thermoplastischen Schaumstoffplatten und die Heizelemente in ihrer Breite (y-Richtung) 30 bis 140 %, vorzugsweise 60 bis 120 %, der entsprechenden Breite (y-Richtung) der zwei dünneren Schaumstoffplatten betragen.

Im Rahmen dieser Ausführungsform werden vorzugsweise in Schritt b) zwei Heizelemente aus jeweils zueinander entgegengesetzten Richtungen in den Zwischenraum eingeführt und/oder es werden vorzugsweise zwei Heizelemente in Schritt d) in jeweils zueinander entgegengesetzten Richtungen aus dem Zwischenraum wieder entfernt.

Prinzipiell ist es denkbar, dass beide Ausgangsplatten in Schritt e) gegeneinander gedrückt werden, also so lange aufeinander zu bewegt werden, bis der Abstand a gleich null ist. Vorzugsweise wird erfindungsgemäß aber nur eine der beiden Ausgangsplatten gegen die jeweils andere Ausgangsplatte gedrückt. Bei einer bezogen auf die Räumlichkeit horizontalen Anordnung der Ausgangsplatten ist es bevorzugt, dass die räumlich gesehen obere Ausgangsplatte gegen die untere Ausgangsplatte gedrückt wird. Dies erfolgt vorzugsweise unter Verwendung einer entsprechenden Greifvorrichtung, mit der die Ausgangsplatten sowohl angehoben als auch unter Anwendung von Druck gegen die unteren Platten verschoben werden können. Die unteren Ausgangsplatten können auch auf einer Senkvorrichtung aufliegen, die bei der Herstellung von höherlagigen Schaumstoffplatten entsprechend nach unten bewegt werden kann. Vorzugsweise wird die Senkvorrichtung aber während der Durchführung der erfindungsgemäßen Schritte a) bis e) nicht bewegt. Ein Absenken der Senkvorrichtung erfolgt vorzugsweise erst vor der Wiederholung der Schritte a) bis e), um eine drei- oder höherlagige Schaumstoffplatte herzustellen.

Weiterhin ist es bevorzugt, dass in dieser Ausführungsform des erfindungsgemäßen Verfahrens im Rahmen von Schritt e) ein Verpressen der thermisch zu verschweißenden zusammengefügten dünnen Schaumstoffplatten durchgeführt wird. Das Verpressen erfolgt im Allgemeinen im Sekunden- bis Minutenbereich und/oder bei einem Pressdruck von 0,01 bis 0,5 bar, vorzugsweise von 0,1 bis 0,5 bar.

Weiterhin ist es im Rahmen der vorstehenden Ausführungsform bevorzugt, dass das Verbinden durch thermisches Verschweißen erfolgt und
i) eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird, und/oder
ii) zwei Heizelemente verwendet werden und/oder die Heizelemente Heizplatten sind, vorzugsweise IR-Strahler mit einer Oberflächentemperatur von 200 bis 1 000 °C, insbesondere von 300 bis 700 °C, und/oder
iii) die Heizelemente in den Schritten b) und d) mit einer Geschwindigkeit von 0,1 bis 5 m/s, vorzugsweise von 0,3 bis 3 m/s, bewegt werden, und/oder
iv) in Schritt b) zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) maximal 20 Sekunden, vorzugsweise maximal 10 Sekunden, insbesondere maximal 5 Sekunden, beträgt.

Ein weiterer Gegenstand der vorliegenden Erfindung ist eine zumindest zweilagige Platte, erhältlich nach dem vorstehend beschriebenen Verfahren.

Ein weiterer Gegenstand der vorliegenden Erfindung ist die Verwendung einer solchen zumindest zweilagigen Platte als Dämmmaterial für die Außenwand eines Bauwerks.

Ein weiterer Gegenstand der vorliegenden Erfindung ist die Außenwand eines Bauwerks, auf die eine erfindungsgemäße zumindest zweilagige Platte aufgebracht ist, vorzugsweise ist die erfindungsgemäße zumindest zweilagige Platte so auf die Außenwand aufgebracht, dass eine flächenmäßig größte Seite (xy-Ebene) einer dünneren thermoplastischen Ausgangsplatte (TS) mit der Außenwand des Bauwerks verbunden ist.

### Nachfolgend wird die vorliegende Erfindung anhand von Beispielen näher erläutert

### Beispiele

In den nachfolgenden Beispielen werden die zumindest zweilagigen Platten durch thermisches Verschweißen hergestellt. Das thermische Verschweißen wird in einer Verschweißungsanlage durchgeführt, die sinngemäß in WO 2015/011016 in den dortigen Versuchen verwendet worden ist. Die in den vorliegenden Beispielen eingesetzte Verschweißungsanlage umfasst somit Aufnahmeplatten, die die zu verschweißenden Ausgangsplatten (dünnere thermoplastische Schaumstoffplatte (TS) sowie dünnere Platte (OZ)) in Abmessungen bis 1 300 x 660 mm aufnehmen können. Die Aufnahmeplatten und das zu verschweißende Material sind vertikal angeordnet. Soweit im nachfolgenden Text nicht anders ausgeführt, sind in den vorliegenden Beispielen die entsprechenden Parameter gemäß den Versuchen von WO 2015/011016 verwendet worden.

Die zu verschweißenden Ausgangsplatten, also mindestens eine dünnere thermoplastische Schaumstoffplatte (TS) und mindestens eine dünnere Platte (OZ), haben jeweils die folgenden Dimensionen:

| | |
|---|---|
| Länge (x-Richtung): | 1 000 mm |
| Breite (y-Richtung): | 500 mm |
| Dicke (z-Richtung): | Die jeweiligen Werte sind in der nachfolgenden Tabelle 1 für die einzelnen Beispiele angegeben. |

Das thermische Verschweißen wird so durchgeführt, dass erfindungsgemäß in der zumindest zweilagigen Platte nach dem Verschweißungsvorgang jeweils eine flächenmäßig gleichgroße Seite, die von der dünneren thermoplastischen Schaumstoffplatte (TS) bzw. von der dünneren Platte (OZ) stammt, miteinander verbunden werden. Die jeweiligen Seiten der entsprechenden Ausgangsplatten haben genau die gleichen Dimensionen, es handelt sich somit um eine der beiden flächenmäßig größten Seiten der jeweiligen Ausgangsplatten, die durch die x-Richtung und die y-Richtung definiert werden.

Zwei Heizelemente der Abmessung 1 320 und 680 mm werden auf die gewünschte Schweißtemperatur aufgeheizt. Das Aufheizen geschieht kontaktlos durch IR-Strahler, kann aber auch durch induktive Beheizung erfolgen.

Von den Heizstationen werden die Heizelemente in den Zwischenraum zwischen die zu verschweißenden Platten bewegt. Dabei werden die Heizelemente zunächst beschleunigt und dann wieder abgebremst, so dass die Heizelemente mittig vor den zu verschweißenden Platten stehen bleiben. Dort bleiben die Heizelemente für eine definierte Heizzeit stehen.

Am Ende der Heizzeit werden die Heizelemente wieder beschleunigt und verlassen den Zwischenraum zwischen den zu verschweißenden Platten. Genauere Informationen in diesem Zusammenhang können der Tabellen 2 entnommen werden.

Sobald die Heizelemente den Zwischenraum zwischen den zu verschweißenden Platten verlassen haben, werden diese zusammengepresst. Dabei bewegen sich beide Aufnahmeplatten aufeinander zu und pressen die zu verschweißenden Platten mit einem definierten Anpressdruck zusammen.

Bei den in der Tabelle 2 aufgeführten Beispielen 1 bis 4 wird der vorgenannte Verschweißungsvorgang einfach durchgeführt, wobei dadurch eine genau zweilagige dünnere Platte erhalten wird. Im Gegensatz dazu wird bei den in der Tabelle 3 aufgeführten Beispielen 5 bis 8 eine genau dreilagige Platte erhalten. Bei diesen Beispielen wird der vorstehend beschriebene Verschweißungsvorgang zweimal durchgeführt. In anderen Worten ausgedrückt, wird bei den in Tabelle 2 aufgeführten Beispielen eine zweite dünnere thermoplastische Schaumstoffplatte (TS) auf die nach dem ersten Verschweißungsvorgang erhaltene zumindest zweilagige Platte aufgeschweißt.

### Herstellung einer zweilagigen Platte

Es werden folgende dünnere Ausgangsplatten eingesetzt:
a) thermoplastische Platten (TS) und
b) Platten aus einem offenzelligen Material (OZ)

Sofern als thermoplastische Ausgangsplatte a) Styrodur eingesetzt wird, wird bei diesen Ausgangsplatten vor dem Durchführen des thermischen Verschweißens an den zu verschweißenden Flächen die Schäumhaut durch Fräsen entfernt.

### Beispiel 1

a) Neopor®
b) Basotect® G+

### Beispiel 2

a) Neopor®
b) PU-Weichschaum

### Beispiel 3

a) Styrodur® 2800 C
b) Basotect® G+

### Beispiel 4

a) Styrodur® 2800 C
b) PU-Weichschaum

In Tabelle 1 sind die Eigenschaften der oben genannten dünneren Ausgangsplatten a) und b) dargestellt (Vergleichsbeispiele).

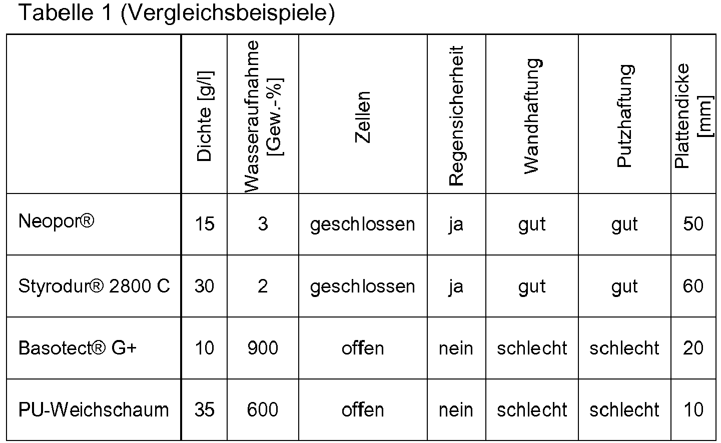

Durch einfaches Ausführen des Schweißvorgangs werden folgende Kombinationen von zweilagigen Platten hergestellt:

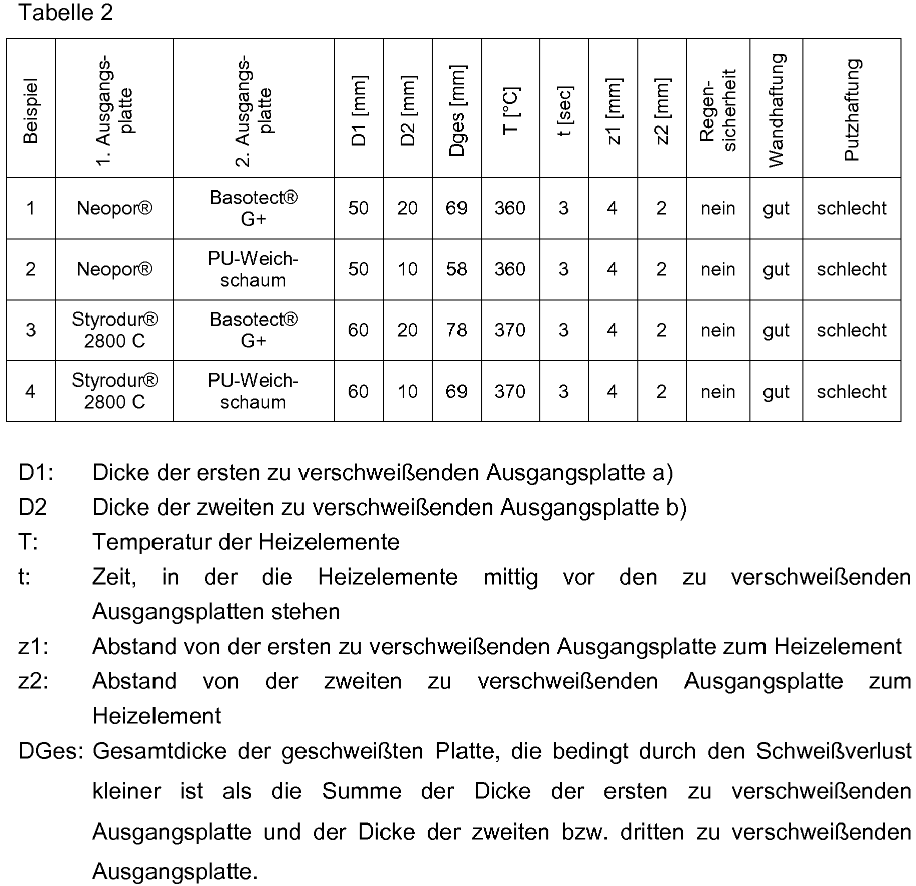

### Herstellung einer dreilagigen Platte

Durch zweifaches Ausführen des Schweißvorgangs gemäß der Tabelle 2 werden folgende Kombinationen von dreilagigen Platten hergestellt:

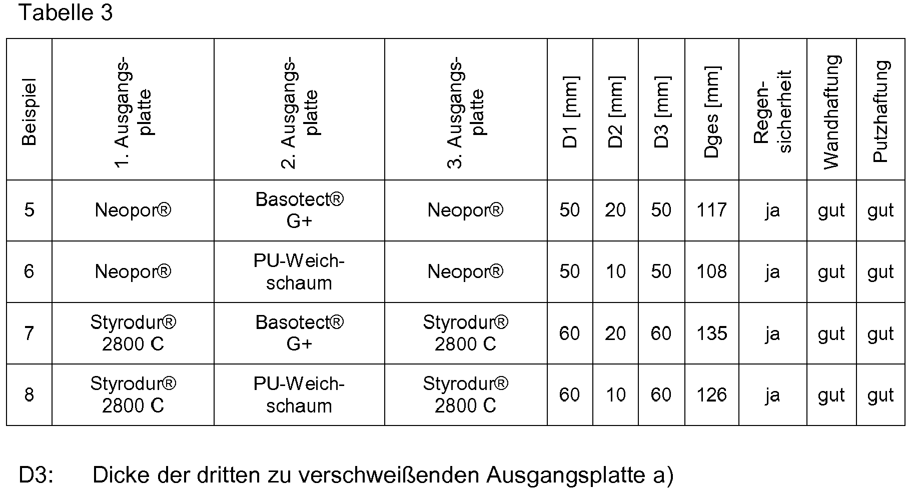

### Wandhaftung

Zur Überprüfung der Wandhaftung werden die in Tabelle 1 genannten Platten sowie die erfindungsgemäßen mehrlagigen Platten (Tabellen 2 und 3) auf eine Betonoberfläche aufgeklebt. Dazu wird ein handelsüblicher Kleber, beispielsweise der Bauhaus VWS Klebe- und Armierungsmörtel, verwendet. Der Kleber wird gemäß dem beiliegenden Datenblatt verarbeitet. Die Haftung der in Tabelle 1 genannten Platten sowie der erfindungsgemäßen mehrlagigen Platten (Tabellen 2 und 3) auf der Betonoberfläche wird per Hand im Abreißversuch qualitativ überprüft.

Die erfindungsgemäßen zweilagigen Platten (Tabelle 2) werden so auf die Betonoberfläche aufgebracht, dass eine flächenmäßig größte Seite (xy-Ebene) der dünneren thermoplastischen Ausgangsplatten (TS) mit der Betonoberfläche verbunden ist.

### Putzhaftung

Zur Überprüfung der Putzhaftung werden die in Tabelle 1 genannten Platten sowie die erfindungsgemäßen mehrlagigen Platten (Tabellen 2 und 3) auf eine Putzoberfläche (Fertig-Rollputz Royal der Firma Knauf) aufgeklebt. Der Kleber (Bauhaus VWS Klebe- und Armierungsmörtel) und der Fertig-Rollputz werden gemäß dem beiliegenden Datenblatt verarbeitet. Die Haftung der in Tabelle 1 genannten Platten sowie der erfindungsgemäßen mehrlagigen Platten (Tabellen 2 und 3) auf der Putzoberfläche wird per Hand im Abreißversuch qualitativ überprüft.

Die erfindungsgemäßen zweilagigen Platten (Tabelle 2) werden so auf die Putzoberfläche aufgebracht, dass eine flächenmäßig größte Seite (xy-Ebene) der dünneren Ausgangsplatten (OZ) mit der Putzoberfläche verbunden ist.

Die erfindungsgemäßen zweilagigen Platten (Tabelle 2) zeichnen sich durch eine hohe Wandhaftung aus verglichen mit einer einzelnen Platte aus einem offenzelligen Material (Tabelle 1).

Die erfindungsgemäßen dreilagigen Platten (Tabelle 3) weisen zusätzlich zu einer hohen Wandhaftung auch eine hohe Putzhaftung auf. Außerdem nehmen die dreilagigen Platten sehr wenig Wasser auf und sind dadurch regensicher, d.h. sie sind für Außenanwendungen geeignet.

## Patentansprüche

1. Verfahren zur Herstellung einer zumindest zweilagigen Platte durch Verbinden von mindestens einer dünneren thermoplastischen Schaumstoffplatte (TS) und mindestens einer dünneren Platte (OZ), wobei die mindestens eine dünnere Platte (OZ) aus einem offenzelligen Material hergestellt ist.

2. Verfahren gemäß Anspruch 1, **dadurch gekennzeichnet, dass** das Verbinden der mindestens einen dünneren thermoplastischen Schaumstoffplatte (TS) und der mindestens einen dünneren Platte (OZ) durch thermisches Verschweißen erfolgt.

3. Verfahren gemäß Anspruch 1 oder 2, **dadurch gekennzeichnet, dass**
i) das offenzellige Material mindestens 60 %, bevorzugt mindestens 80 %, mehr bevorzugt mindestens 90 %, offene Zellen, bezogen auf die Gesamtzahl der Zellen in dem offenzelligen Material, und/oder
ii) das offenzellige Material eine Dichte von ≤ 100 g/l, bevorzugt von ≤ 60 g/l, mehr bevorzugt von ≤ 30 g/l, aufweist.

4. Verfahren gemäß einem der Ansprüche 1 bis 3, **dadurch gekennzeichnet, dass** das offenzellige Material ein offenzelliger Schaumstoff, bevorzugt ein offenzelliger duroplastischer Schaumstoff, mehr bevorzugt ein offenzelliger Polyurethan-Schaumstoff oder ein offenzelliger Melaminharz-Schaumstoff, ist.

5. Verfahren gemäß einem der Ansprüche 1 bis 4, **dadurch gekennzeichnet, dass**
i) das offenzellige Material ein Reaktivschaum ist, und/oder
ii) das offenzellige Material ein mechanischer Schlagschaum ist.

6. Verfahren gemäß einem der Ansprüche 1 bis 5, **dadurch gekennzeichnet, dass** die mindestens eine dünnere thermoplastische Schaumstoffplatte (TS) aus einem geschlossenzelligen Material hergestellt ist, das mindestens 80 %, bevorzugt mindestens 90 %, mehr bevorzugt mindestens 95 % geschlossene Zellen, bezogen auf die Gesamtzahl der Zellen in dem geschlossenzelligen Material, enthält.

7. Verfahren gemäß einem der Ansprüche 1 bis 6, **dadurch gekennzeichnet, dass** die mindestens eine dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon und Polyethylenterephthalat.

8. Verfahren gemäß einem der Ansprüche 1 bis 7, **dadurch gekennzeichnet, dass** eine dreilagige Platte hergestellt wird durch Verbindung von zwei dünneren thermoplastischen Schaumstoffplatten (TS) und einer dünneren Platte (OZ), wobei jeweils eine dünnere thermoplastische Schaumstoffplatte (TS) auf jeweils einer sich gegenüberliegenden Seite der dünneren Platte (OZ) unter Erhalt der dreilagigen Platte aufgebracht wird.

9. Verfahren gemäß Anspruch 8, **dadurch gekennzeichnet, dass** eine vier- oder höherlagige Platte hergestellt wird, wobei ausgehend von der dreilagigen Platte eine zweite dünnere Platte (OZ) auf eine von einer dünneren thermoplastischen Schaumstoffplatte (TS) stammenden Seite der dreilagigen Platte aufgebracht wird, die daraus erhaltene vierlagige Platte abwechselnd insgesamt vier Lagen aus dünneren thermoplastischen Schaumstoffplatten (TS) und dünneren Platten (OZ) aufweist und die erste und zweite dünnere Platte (OZ) sich auf jeweils einer gegenüberliegenden Seite einer dünneren thermoplastischen Schaumstoffplatte (TS) befinden, wobei gegebenenfalls zum Erhalt von höherlagigen Platten das abwechselnde Aufbringen einer weiteren dünneren thermoplastischen Schaumstoffplatte (TS) oder einer dünneren Platte (OZ) mindestens einfach wiederholt wird.

10. Verfahren gemäß einem der Ansprüche 1 bis 9, **dadurch gekennzeichnet, dass** eine zumindest zweilagige Platte durch thermisches Verschweißen hergestellt wird, umfassend die folgenden Schritte a) bis e):
a) eine dünnere thermoplastische Schaumstoffplatte (TS) und eine dünnere Platte (OZ) werden in einem Abstand a parallel zueinander ausgerichtet, sodass sie einen Zwischenraum ausbilden,
b) in den Zwischenraum werden mindestens zwei Heizelemente auf parallel zueinander versetzten Ebenen und parallel zu den beiden dünneren Platten (TS) und (OZ) eingeführt, wobei sich die Oberflächen der beiden dünneren Platten (TS) und (OZ) und die Heizelemente nicht gegenseitig berühren,
c) die Heizelemente werden so weit zwischen die beiden dünneren Platten (TS) und (OZ) eingeführt, bis zwischen den beiden dünneren Platten (TS) und (OZ), bezogen auf jede Stelle der jeweiligen Oberfläche der beiden dünneren Platten (TS) und (OZ), zumindest zeitweise sich mindestens eines der Heizelemente befunden hat,
d) die Heizelemente werden vollständig aus dem Zwischenraum wieder entfernt,
e) mindestens eine der beiden dünneren Platten (TS) und (OZ) wird gegen die Oberfläche der jeweiligen anderen dünneren Platte (TS) und (OZ) gedrückt,
wobei vorzugsweise in Schritt b) zwei Heizelemente aus jeweils zueinander entgegengesetzten Richtungen in den Zwischenraum eingeführt werden und/oder vorzugsweise zwei Heizelemente in Schritt d) in jeweils zueinander entgegengesetzten Richtungen aus dem Zwischenraum wieder entfernt werden.

11. Verfahren gemäß einem der Ansprüche 1 bis 10, **dadurch gekennzeichnet, dass** das Verbinden durch thermisches Verschweißen erfolgt und
i) eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird, und/oder
ii) zwei Heizelemente verwendet werden und/oder die Heizelemente Heizplatten sind, vorzugsweise IR-Strahler mit einer Oberflächentemperatur von 200 bis 1000°C, insbesondere von 300 bis 700°C, und/oder
iii) die Heizelemente in den Schritten b) und d) gemäß Anspruch 10 mit einer Geschwindigkeit von 0,1 bis 5 m/s, vorzugsweise von 0,3 bis 3 m/s, bewegt werden, und/oder
iv) in Schritt b) gemäß Anspruch 10 zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) gemäß Anspruch 10 maximal 20 Sekunden, vorzugsweise maximal 10 Sekunden, insbesondere maximal 5 Sekunden, beträgt.

12. Verfahren gemäß einem der Ansprüche 1 bis 11, **dadurch gekennzeichnet, dass**
i) die mindestens eine dünnere thermoplastische Schaumstoffplatte (TS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 2 bis 100 mm, vorzugsweise von 5 bis 50 mm, aufweist, und/oder
ii) die mindestens eine dünnere Platte (OZ) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 10 bis 400 mm, vorzugsweise von 20 bis 200 mm, aufweist, und/oder
iii) jede dünnere thermoplastische Schaumstoffplatte (TS) und jede dünnere Platte (OZ) identische Werte für die Länge (x-Richtung) und die Breite (y-Richtung) aufweisen, und/oder
iv) die mindestens eine dünnere thermoplastische Schaumstoffplatte (TS) und die mindestens eine dünnere Platte (OZ) über jeweils eine der beiden flächenmäßig größten Seiten (xy-Ebene) der entsprechenden Platte miteinander verbunden werden, besonders bevorzugt weisen die miteinander zu verbindenden Platten identische Länge- und Breitedimensionen auf.

13. Zumindest zweilagige Platte erhältlich nach einem Verfahren gemäß einem der Ansprüche 1 bis 12.

14. Verwendung einer zumindest zweilagigen Platte gemäß Anspruch 13 als Dämmmaterial für die Außenwand eines Bauwerks.

15. Außenwand eines Bauwerks, auf die eine zumindest zweilagige Platte gemäß Anspruch 13 aufgebracht ist, vorzugsweise ist die zumindest zweilagige Platte so auf die Außenwand aufgebracht, dass eine flächenmäßig größte Seite (xy-Ebene) einer dünneren thermoplastischen Ausgangsplatte (TS) mit der Außenwand des Bauwerks verbunden ist.
